# EUROPÄISCHE PATENTANMELDUNG

(11) **EP 1 909 409 A1**
(43) Veröffentlichungstag der Anmeldung: **09.04.2008**
(21) Anmeldenummer: 06022237.9
(22) Anmeldetag: 24.10.2006
(51) Int. Cl.: H04B 7/26

(54) **Verfahren zur zeitlichen Steuerung einer Signalübertragung in Aufwärtsrichtung in einem Funk-Kommunikationssystem**

(30) Priorität: 04.10.2006 EP 06460034
(71) Anmelder: Nokia Siemens Networks GmbH & Co. KG, 81541 München (DE)
(72) Erfinder: Angelow, Iwajlo, 43-430 Skoczow (PL); Chmiel, Mieszko, 48-340 Glucholazy (PL)

(57) **Zusammenfassung**

Nach dem erfindungsgemäßen Verfahren zur Steuerung einer zeitlichen Aussendung von Signalen eines Teilnehmerendgerätes (UE A) für einen zeitsynchronen Empfang an einer Basisstation (Node B) eines Funk-Kommunikationssystems, wird bei Feststellung, dass ein ermittelter Zeitversatz von empfangenen Signalen gleich oder größer einem vorgegebenen Schwellwert ist, von der Basisstation (Node B) ein Wechsel von Einschritt-Steuerungsbefehlen zu Mehrschritt-Steuerungsbefehlen zur Steuerung der zeitlichen Aussendung des Teilnehmerendgerätes (UE A) durchgeführt, oder von dem Teilnehmerendgerät (UE A) eine Synchronisationsprozedur unter Verwendung eines zufallsgesteuerten Zugriffskanals initiiert.

## Beschreibung

Die Erfindung betrifft ein Verfahren zur zeitlichen Steuerung einer Übertragung von Signalen in Aufwärtsrichtung durch Teilnehmerendgeräte derart, dass diese synchron am Ort einer Basisstation eines Funk-Kommunikationssystems empfangen werden können. Weiterhin betrifft die Erfindung Komponenten eines Funk-Kommunikationssystems zur Durchführung des erfindungsgemäßen Verfahrens.

Aktuelle und in der Standardisierung befindliche Funk-Kommunikationssystem besitzen unterschiedliche Notwendigkeiten einer Synchronisierung von Aussendungen in Aufwärtsrichtung durch Teilnehmerendgeräte, sodass diese synchron bzw. zumindest innerhalb einer tolerierbaren zeitlichen Breite von einer Basisstation empfangen und verarbeitet werden können, und verwenden hierfür unterschiediche Ansätze.

So wird beispielsweise nach dem bekannten GSM-Standard (Global System for Mobile Communication) sowohl bei einem Erstzugriff eines Teilnehmerendgerätes als auch bei bestehenden Verbindungen eine so genannte Mehrschritt-Zeitangleichungssteuerung (engl. Multi-Step Timing Alignment Control (TAC)) eingesetzt. Das Teilnehmerendgerät orientiert sich bei einem zufallsgesteuerten Erstzugriff (engl. random accesss) zunächst zur Steuerung der zeitlichen Aussendung eines Zugriffsfunkblocks nach dem Prinzip einer offenen Regelungsschleife (engl. open loop) an in Abwärtsrichtung übertragenen Signalen der Basisstation. Der Zugriffsfunkblock weist eine vergleichsweise große Schutzzeit (engl. guard period) auf, um die Wahrscheinlichkeit eines Empfangs des Zugriffsfunkblocks innerhalb eines Zeitfensters bzw. Zeitschlitzes durch die Basisstation zu erhöhen. Nach Empfang des Zugriffsfunkblocks durch die Basisstation signalisiert diese abhängig von dem Zeitpunkt des Empfangs des Zugriffsfunkblocks dem Teilnehmerendgerät, ob ein Verzögern (engl. retract) bzw. Vorziehen (engl. advance), d.h. ein Einstellen des so genannten Timing Advance, der Aussendung durch das Teilnehmerendgerät erforderlich ist. Mittels der Mehrschritt-Signalisierung teilt die Basisstation dem Teilnehmerendgerät dabei mit, um welche Anzahl von Zeiteinheiten ein derartiges Verzögern oder Vorziehen erfolgen soll. Bei bestehenden Verbindungen, beispielsweise einer so genannten leitungsvermittelten Verbindung (engl. circuit switched), orientiert sich die Basisstation nach dem Prinzip einer geschlossenen Regelungsschleife (engl. closed loop) an von dem Teilnehmerendgerät in der Verbindung übertragenen Sprachdatenpaketen bzw. an Signalen des so genannten SACCH (Slow Associated Control Channel). Während Unterbrechungen der Sprachdatenübertragung, d.h. beispielsweise während einer so genannten DTX-Periode (DTX - Discontiuous Transmission) orientiert sich die Steuerung des Timing Advance hingegen an periodisch von dem Teilnehmerendgerät gesendeten so genannten SID-Rahmen (SID - Silence Description) oder an Signalen des SACCH, sodass in jedem Fall alle vier Multirahmen bzw. 480 ms eine zeitliche Anpassung der Aussendung erfolgt.

Bei einer paketorientierten Verbindung nach dem GPRS-Standard (General Packet Radio System) erfolgt ebenfalls alle 480 ms eine zeitliche Anpassung der Aussendung, wobei sich die Basisstation an empfangenen Datenpaketen orientiert. Für den Fall, dass das Teilnehmerendgerät über einen längeren Zeitraum keine Datenpakete aussendet bzw. ihm keine Funkresourcen in Aufwärtsrichtung zugewiesen sind, orientiert sich die Steuerung an alle acht Multirahmen bzw. 960 ms von dem Teilnehmerendgerät gesendeten Zugriffsfunkblöcken.

Der FDD-Modus (FDD - Frequency Division Duplex) des UMTS-Standards (UMTS - Universal Mobile Telecommunication System), auch als W-CDMA (Wideband-Code Division Multiple Access) bezeichnet, weist im Gegensatz zum vorstehend beschriebenen GSM- bzw. GPRS-Standard keinerlei zeitliche Steuerung der Aussendungen in Aufwärtsrichtung auf, weder im Rahmen eines Erstzugriffs, noch bei bestehenden Verbindungen. Aussendungen in Aufwärtsrichtung orientieren sich allein an dem Zeitpunkt des Empfangs von Signalen in Abwärtsrichtung, sodass Signale von Teilnehmerendgeräten, welche sich in unterschiedlichem Abstand zu einer Basisstation befinden, nicht zeitlich synchron von der Basisstation empfangen werden.

Für die im Rahmen der 3GPP (3rd Generation Partnership Project) standardisierte Weiterentwicklung des UMTS-Standards, als Evolved Universal Terrestrial Radio Access (E-UTRA) oder LTE (Long Term Evolution) bezeichnet, ist nach Kapitel 9.1.2.6 des aktuellen technischen Berichts 3GPP TR 25.814 V7.0.0 (2006-06) "Physical layer aspects for evolved Universal Terrestrial Radio Access (UTRA) (Release 7)" derzeit vorgesehen, dass seitens der Basisstation (eNB - E-UTRAN NodeB) so genannte Zeitsteuerungsbefehle (engl. timing control commands) zur Steuerung der zeitlichen Aussendungen der Teilnehmerendgeräte (UE - User Equipment) signalisiert werden. Dabei werden zwei alternative Ausführungsformen dieser Befehle in Betracht gezogen. Zum einen ein so genannter binärer Zeitsteuerungsbefehl (engl. binary timingcontrol command), welcher mittels zweier binärer Zustände eines Signalisierungsbits ein Verzögern bzw. Vorziehen der Aussendung um eine bestimmte noch zu definierende Schrittweite in Mikrosekunden (us) steuert und mit einer ebenfalls noch zu definierenden Periodizität signalisiert wird. Zum anderen ein mehr oder weniger dem Mehrschritt-Zeitangleichungssteuerungs-Befehl des GSM-Standards entsprechender Befehl, welcher jedoch nur bedarfsabhängig signalisiert wird.

Die Verwendung von binären Zeitsteuerungsbefehlen bietet zweifelsfrei den Vorteil einer nur geringen Signalisierungslast durch Verwendung lediglich eines einzigen Signalisierungsbits, wobei ergänzend seitens des Netzwerkes eine Definition der Schrittweite und der Periodizität gegebenenfalls auf einer höheren Protokollschicht vorgegeben und dem Teilnehmerendgerät signalisiert werden muss, welches wiederum situationsabhängig oder auch periodisch erfolgen kann. Nachteilig kann jedoch mittels eines Befehls nur eine bestimmte Änderung der zeitlichen Aussendung umgesetzt werden, welches insbesondere bei einer auf der Funkschnittstelle auftretenden rasch ändernden Multipfad-Übertragung (engl. multi-path transmission) dazu führen kann, dass die Regelung diesen Änderungen nicht ausreichend schnell folgen kann. Hierzu sei auf das so genannte Birth-Dead-Beispiel der Anlage B.4 der technischen Spezifikation TS 25.104 V7.4.0 (2006-06) "Base Station (BS) radio transmission and reception (FDD) (Release 7)" verwiesen, nach dem ein Pfad innerhalb eines Zeitraums von 191 ms eine relative Änderung von bis zu 9 us erfahren kann.

Mittels einer Verwendung von Mehrschritt-Zeitsteuerungsbefehlen kann entgegen binären Zeitsteuerungsbefehlen vergleichsweise effizient und flexibel auf schnelle Pfadänderungen reagiert werden, jedoch führt dies nachteilig zu einer deutlich erhöhten Signalisierungslast gegenüber einer binären Information.

Aufgabe der Erfindung ist es daher, ein Verfahren sowie Komponenten eines Funk-Kommunikationssystems anzugeben, welche eine flexible und gleichzeitig effiziente Zeitsteuerung von Signalübertragungen in Aufwärtsrichtung ermöglichen. Diese Aufgabe wird durch die Merkmale der unabhängigen Patentansprüche gelöst. Vorteilhafte Weiterbildungen der Erfindung sind abhängigen Patentansprüchen entnehmbar.

Erfindungsgemäß wird zur Steuerung einer zeitlichen Aussendung von Signalen eines Teilnehmerendgerätes für einen zeitsynchronen Empfang an einer Basisstation eines Funk-Kommunikationssystems bei Feststellung, dass ein ermittelter Zeitversatz von empfangenen Signalen gleich oder größer einem vorgegebenen Schwellwert ist, von der Basisstation ein Wechsel von Einschritt-Steuerungsbefehlen zu Mehrschritt-Steuerungsbefehlen zur Steuerung der zeitlichen Aussendung des Teilnehmerendgerätes durchführt, oder von dem Teilnehmerendgerät eine Synchronisationsprozedur unter Verwendung eines zufallsgesteuerten Zugriffskanals initiiert.

Hierdurch wird vorteilhaft ermöglicht, bei Bedarf, d.h. bei einem auftretenden vergleichsweise großen Zeitversatz flexibel von einleitend beschriebenen binären zu Mehrschritt-Steuerungsbefehlen zu wechseln, um damit eine schnelle Wiederherstellung der Synchronität zu erzielen. Die alternative erfindungsgemäße Durchführung einer Synchronisationsprozedur beispielsweise unter Verwendung des zufallsgesteuerten Zugriffskanals besitzt den Vorteil, dass anstelle einer langwierigen Wiederherstellung der Synchronität mittels Zeitsteuerungsbefehlen bekannte Mechanismen zur Erlangung der Synchronität eingesetzt werden, und damit die gesamte Signalisierungslast auf der Funkschnittstelle verringert wird.

Gemäß einer ersten Ausgestaltung der Erfindung wird als Einschritt-Steuerungsbefehl ein binäres oder ternäres Signalisierungsbit verwendet. Die Verwendung eines ternären Signalisierungsbits anstelle eines bekannten binären Signalisierungsbits ist zudem als eigenständige Erfindung in einem unabhängigen Patentanspruch beansprucht. Sie ermöglicht vorteilhaft, einen dritten Zustand bzw. Befehl, beispielsweise dass keine zeitliche Änderungen von Aussendungen durch das Teilnehmerendgerät erfolgen soll, zu signalisieren und damit eigentlich nicht erforderliche zeitliche Anpassungen, welche zu einem erhöhten Energieverbrauch des Teilnehmerendgerätes führen, zu unterbinden.

Gemäß einer weiteren Ausgestaltung der Erfindung wird der dem Vergleich mit einem Schwellwert zugrunde liegende Zeitversatz von der Basisstation und/oder dem Teilnehmerendgerät ermittelt, wobei der Zeitversatz gemäß einer weiteren Ausgestaltung mittels eines Vergleichs eines Empfangszeitpunktes von empfangenen Signalen mit einer Zeitreferenz ermittelt wird. Hierdurch kann ausgehend von Ermittlungen und Entscheidungen der Basisstation bzw. des Teilnehmerendgerätes gesteuert werden, ob ein Wechsel des Format der Zeitsteuerungsbefehle oder eine Synchronisationsprozedur erfolgen soll.

Gemäß einer weiteren Ausgestaltung der Erfindung wird bei der Entscheidung, ob ein Wechsel der Steuerungsbefehle durchgeführt oder eine Synchronisationsprozedur initiiert werden soll, ein aktueller Status des Teilnehmerendgerätes und/oder ein Diensttyp einer bestehenden Verbindung zu dem Teilnehmerendgerät berücksichtigt. Handelt es sich beispielsweise um einen Dienst mit hohen Dienstqualitätsanforderungen (engl. Quality of Service (QoS)), so könnten bei Durchführung einer Synchronisationsprozedur vorgegebene Anforderungen nicht mehr erfüllt werden. In diesem Fall ist allein mittels eines Wechsels zu Mehrschritt-Zeitsteuerungsbefehlen eine Kompensation des ermittelten Zeitversatzes und damit eine Einhaltung der Anforderungen möglich. Anders ist es bei einem Dienst mit bezüglich Zeitverzögerungen nur geringen Anforderungen. In diesem Fall kann vorteilhaft eine Synchronisationsprozedur durchlaufen werden, ohne dass die gegebenen Anforderungen nicht erfüllt würden. Gleiches gilt beispielsweise für den Status eines Teilnehmerendgerätes, d.h. ob es beispielsweise aktiv eine Verbindung unterhält oder nur passiv bzw. schlafend ist.

Ein erfindungsgemäßes Funk-Kommunikationssystem sowie Komponenten des System in Form von einer Basisstation und einem Teilnehmerendgerät weisen jeweils Mittel auf zur Durchführung des erfindungsgemäßen Verfahrens.

Die Erfindung wird nachfolgend anhand eines Ausführungsbeispiels näher dargestellt. Dabei zeigen
- FIG 1: eine beispielhafte Struktur eines Funk-Kommunikationssystems,
- FIG 2: Zeitiagramme zur beispielhaften Darstellung des zeitlichen Drifts von Übertragungen in Aufwärtsrichtung,
- FIG 3: Zeitdiagramme zur beispielhaften Darstellung des zeitlichen Versatzes zwischen Signalen von unterschiedlichen Teilnehmerendgeräten,
- FIG 4: ein Ablaufdiagramm eines ersten erfindungsgemäßen Verfahrens, und
- FIG 5: ein Ablaufdiagramm eines zweiten erfindungsgemäßen Verfahrens.

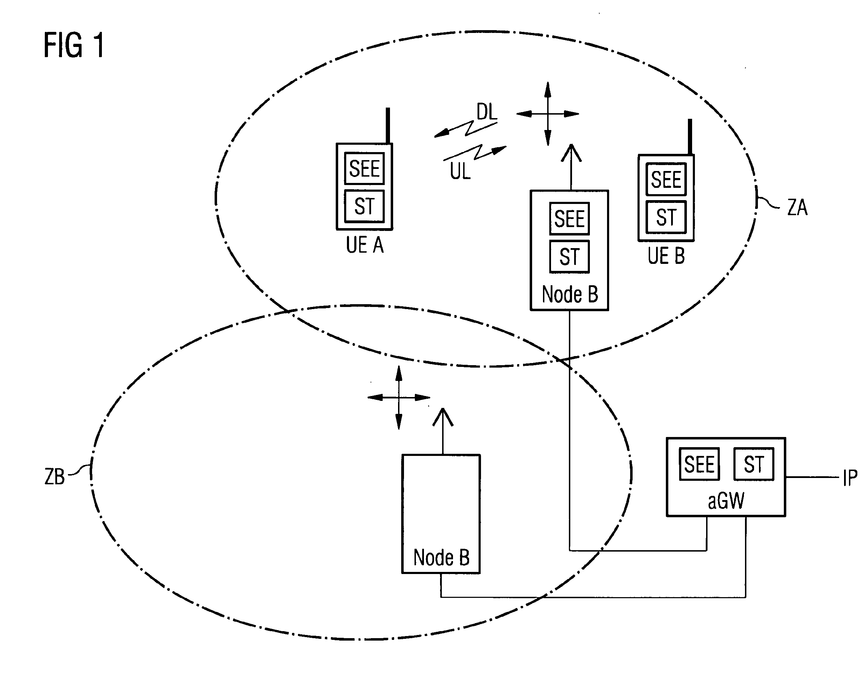

In FIG 1 ist die Struktur eines Funk-Kommunikationssystems, insbesondere nach dem aktuellen Stand der E-UTRA- bzw. UMTS-LTE-Standardisierung, beispielhaft dargestellt. Ein so genannter Zugangsnetzübergang aGW (Access Gateway) steht mit weiteren Komponenten des Systems bzw. anderen Systemen über ein IP-basiertes (IP - Internet Protocol) Netzwerk in Verbindung. Mit diesem Netzwerk tauscht der Zugangsnetzübergang aGW Datenverkehr in Form von Datenpaketen aus. Der Zugangsnetzübergang aGW ist weiterhin mit einer Vielzahl Basisstationen Node B verbunden, welche jeweils eine beispielhafte Funkzelle ZA bzw. ZB mit funktechnischen Resourcen versorgen. Die beispielhaft dargestellten Basisstationen Node B sind wiederum über eine Funkschnittstelle mit einem Teilnehmerendgeräten UE A, UE B verbunden. Auf der Funkschnittstelle werden Signale in Aufwärtsrichtung UL (Uplink) und Abwärtsrichtung DL (Downlink) übertragen. Die in dem erfindungsgemäßen Verfahren involvierten Komponenten des Funk-Kommunikationssystems weisen jeweils zumindest eine Sende-/Empfangseinrichtung SEE zum Senden und Empfangen von Signalen sowie eine Steuereinrichtung ST zum Steuern des Komponenten sowie des Verhaltens der Sende-/Empfangseinrichtungen SEE auf.

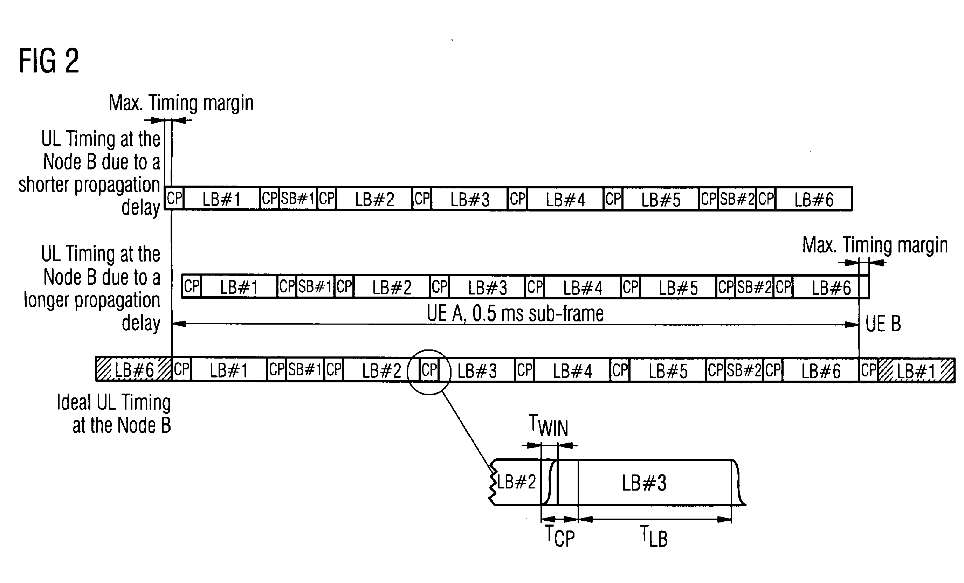

FIG 2 zeigt Zeitdiagramme zur beispielhaften Darstellung des zeitlichen Drifts von in Aufwärtsrichtung UL von dem Teilnehmerendgerät UE gesendeten Signalen abhängig von einer Änderung von Übertragungsverzögerungen. Die FIG 2 ist dabei dem technischen Dokument Tdoc R1-062372 mit dem Titel "Considerations on E-UTRA Uplink Time Synchronization", welches im Rahmen der 3GPP TSG-RAN WG1 #46 Konferenz in Tallinn, Estland, 28. August bis 1. September 2006, eingebracht wurde, entliehen, auf welches für weitergehende Erläuterungen verwiesen wird. In dem unteren Zeitdiagramm ist ausgehend von einem idealen Zeitpunkt (Ideal UL Timing at the Node B) für den Empfang von in einem Unterrahmen (sub-frame) in Aufwärtsrichtung UL gesendeten Signalen am Ort der Basisstation Node B beispielhaft ein empfängerseitig unterstützter maximaler Zeitversatz (Max. Timing margin) definiert. Die beiden oberen Zeitdiagramme zeigen einen im Vergleich zu diesem idealen Zeitpunkt zeitlich verfrühten Empfang von Signalen eines mit einem so genannten CP-Feld (CP - cyclic prefix) beginnenden Unterrahmens aufgrund einer kürzeren Übertragungsverzögerung (shorter propagation delay) und einen zeitlich verspäteten Empfang von Signalen eines Unterrahmens aufgrund einer längeren Übertragungsverzögerung (longer propagation delay), welche jeweils durch die erfindungsgemäße Zeitsteuerung kompensiert werden sollen.

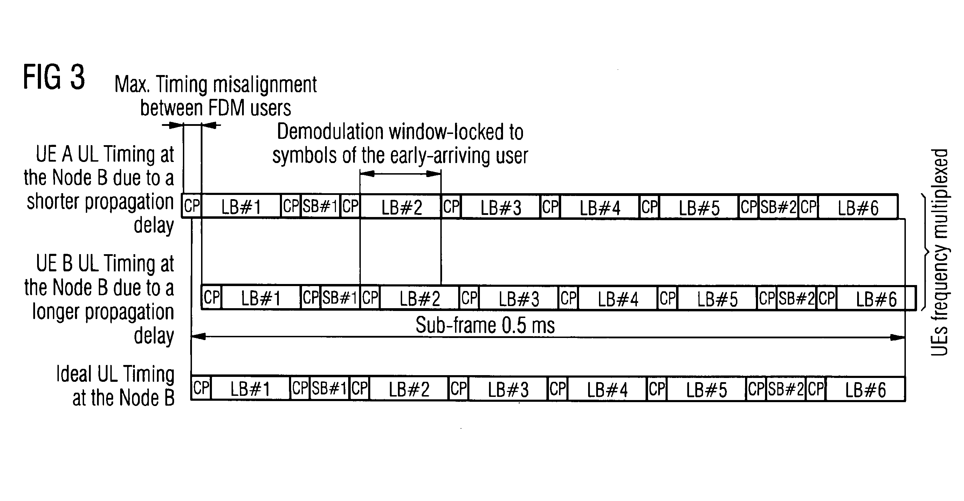

FIG 3 zeigt entsprechende Zeitdiagramme für jeweils eine unterschiedliche Frequenz nutzende Teilnehmerendgeräte UE A, UE B (UEs frequency multiplexed), wie sie beispielhaft in FIG 1 dargestellt sind. Aufgrund eines unterschiedlichen physikalischen Abstands zu der Basisstation Node B treffen Signale eines jeweiligen Unterrahmens zu unterschiedlichen Zeitpunkten am Ort der empfangenden Basisstation Node B ein. Um in einem solchen beispielhaften Fall eine gleichzeitige Demodulierung von Signalen, beispielsweise des Datenblocks LB#2, beider Teilnehmerendgeräte UE A, UE B innerhalb eines Zeitfensters (demodulation window) sicherzustellen, sollte ein maximaler Zeitversatz (Max. timing misalignment) nicht überschritten werden.

Der maximale Zeitversatz sollte nach dem aktuellen Stand der E-UTRA-Standardisierung, siehe Tdoc R1-062372, kleiner der Länge, vorzugsweise kleiner der halben Länge eines zyklischen Präfixes (engl. cyclic prefix) sein, welche mit -3.65 bis 4.13 us angenommen wird. Werte im Bereich von 0.5 bis 1 us sind dabei denkbar, wobei nach dem Beispiel der FIG 3 der maximale Zeitversatz kleiner einer halben Länge des zyklischen Präfixes, d.h. kleiner -2 us, gewählt werden sollte. Bei einer angenommenen maximalen Geschwindigkeit eines Teilnehmerendgerätes von 500 km/h und einer senkrechten (engl. perpendicular) Bewegungsrichtung zu der Basisstation wird dieser maximale Wert jedoch bereits nach 0.5 bzw. 1 Sekunde erreicht. Ein derart dimensionierter maximaler Zeitversatz von ca. 0.5 bis 2 us ist jedoch nicht geeignet, schnelle Änderungen der Übertragungspfade von bis zu 9 us innerhalb von 191 ms nach dem einleitend genannten Birth-Dead-Beispiel der technischen Spezifikation TS 25.104 mittels binärer Zeitsteuerungsbefehle, deren maximale Schrittweite und Periodizität der Signalisierung an der maximalen Zeitversatz orientiert ist, zu kompensieren.

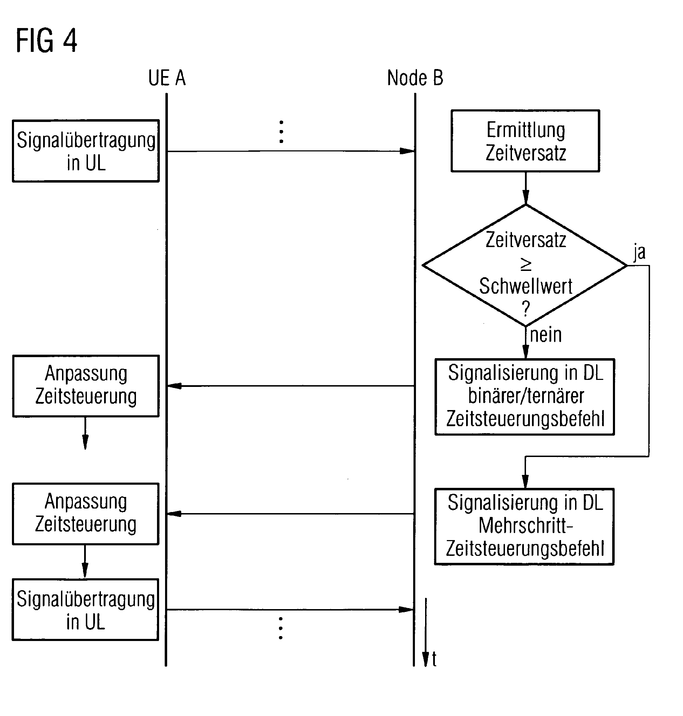

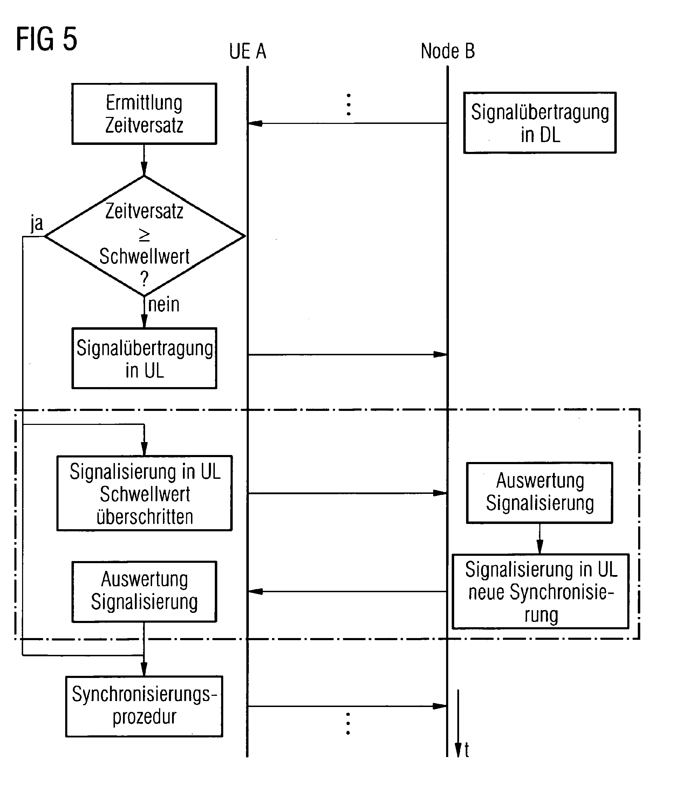

In FIG 4 und FIG 5 sind nun ein erstes und ein zweites Ausführungsbeispiel des erfindungsgemäßen Verfahrens dargestellt, wobei in den angegebenen Ablaufdiagrammen einzelne Aktionen in der beispielhaften Basisstation Node B und dem Teilnehmerendgerät UE A der FIG 1 sowie Signalübertragungen auf der Funkschnittstelle zwischen diesen nach der Zeit t angegeben sind. Neben den dargestellten Aktionen sind selbstverständlich weitere Aktionen und Signalisierungsübertragungen möglich, welche jedoch für die Beschreibung des erfindungsgemäßen Verfahrens nicht von Bedeutung sind.

Es sei als Ausgangssituation angenommen, dass sich das Teilnehmerendgerät UE A in einem so genannten RRC Connected Mode befindet, d.h. in einem Zustand eines aktiven Signalisierungsaustausches mit der Basisstation Node B, unter anderem zur Aufrechterhaltung einer zeitlichen Synchronisierung mit der Zeitreferenz der Basisstation Node B. Dies bedeutet, dass während einer aktiven Übertragung von Signalen, beispielsweise von Datenpaketen eines Dienstes in einem Verkehrskanal (engl. traffic channel) oder von speziellen Nachrichten bzw. Sequenzen in einem Signalisierungskanal (engl. control channel), in Aufwärtsrichtung UL zu der Basisstation Node B diese einen Zeitversatz der empfangenen Signale zur eigenen Zeitreferenz ermittelt. Bei einer Mehrwegeausbreitung auf der Funkschnittstelle orientiert sich die Basisstation Node B zur Bestimmung des Zeitversatzes beispielsweise an dem stärksten Pfad des empfangenen Signals. Abhängig von dem ermittelten Zeitversatz, d.h. ob und in welchem Maße die empfangenen Signale verfrüht oder verspätet eingetroffen sind, signalisiert die Basisstation Node B in Abwärtsrichtung DL zu dem Teilnehmerendgerät UE A, dass eine Aussendung nachfolgender Daten bzw. Signale in Aufwärtsrichtung UL um ein bestimmtes zeitliches Maß vorgezogen oder verzögert erfolgen soll. Dies kann seitens der Basisstation Node B gegebenenfalls in mehreren Signalisierungsschritten erfolgen, beispielsweise wenn das Teilnehmerendgerät UE A einen Paketdatendienst unterhält und lediglich in größeren Zeitabständen, beispielsweise alle vier Multirahmen, Daten und/oder Signalisierungen zur Beibehaltung der Synchronität in Aufwärtsrichtung UL zu der Basisstation Node B sendet, die Basisstation Node B jedoch in jedem Multirahmen eine jeweilige Anpassung der zeitlichen Aussendung des Teilnehmerendgerätes UE A signalisiert.

Es sei ferner angenommen, dass die Signalisierung der Basisstation Node B zur zeitlichen Steuerung der Aussendungen des Teilnehmerendgerätes UE A auf Basis von binären, wie sie aus aktuell existierenden Standards bekannt sind, bzw. erfindungsgemäßen ternären Zeitsteuerungsfehlen erfolgt. Dies bedeutet, dass dem Teilnehmerendgerät UE A beispielsweise mittels eines Signalisierungsbits mit dem Wert +1 signalisiert wird, die Aussendung um 1 us zu verzögern, währenddessen ein Wert -1 signalisiert, die Aussendung um 1 us vorzuziehen. Im Fall einer ternären Zeitsteuerungsbefehls würde beispielsweise der Wert 0 signalisieren, dass seitens des Teilnehmerendgerätes UE A keine zeitliche Änderung der Aussendung erfolgen soll. Wie vorstehend bereits beschrieben, kann die Schrittweite sowie die Periodizität der Aussendung von Zeitsteuerungsbefehlen abhängig von dem maximalen Zeitversatz dimensioniert werden. In jedem Fall ist es jedoch erforderlich, dass das Teilnehmerendgerät UE A in Kenntnis der Periodizität und Schrittweite ist, um die Befehle empfangen und wie von der Basisstation gewünscht umsetzen zu können. Hierzu erfolgt beispielsweise eine Signalisierung seitens der Basisstation Node B nach bekannten Protokollen auf höheren Schichten.

In der FIG 4 erfolgt auf Basis der vorstehend beschriebenen Ausgangssituation eine Signalübertragung des Teilnehmerendgerätes UE A auf der Funkschnittstelle in Aufwärtsrichtung UL zu der Basisstation Node B, in dessen Funkzelle ZA sich das Teilnehmerendgerät UE A nach dem Beispiel der FIG 1 aktuell befindet. Diese Signalübertragung, beispielsweise ein Datenpaket eines Datendienstes oder eine Synchronisationssequenz, wird von der Basisstation Node B empfangen, und zur Ermittlung eines Zeitversatzes beispielsweise der detektierte stärkste Signalpfad mit einer basisstationsinternen Zeitreferenz verglichen. Nachfolgend führt die Basisstation Node B einen Vergleich des ermittelten Zeitversatzes für das Teilnehmerendgerät UE A mit einem vorgegebenen Schwellwert durch. Ergibt der Vergleich, dass der ermittelte Zeitversatz kleiner dem Schwellwert ist - Ergebnis "nein" - , so führt die Basisstation Node B weiterhin eine Signalisierung eines binären bzw. ternären Zeitsteuerungsbefehls durch, welcher von dem diesen Befehl empfangenden Teilnehmerendgerät UE A zur Anpassung der zeitlichen Steuerung nachfolgender Aussendungen berücksichtigt wird. Ergibt der Vergleich hingegen, dass der ermittelte Zeitversatz gleich oder größer dem vorgegebenen Schwellwert ist - Ergebnis "ja" - , so wechselt die Basisstation Node B von einer Signalisierung mittels binärer bzw. ternärer Zeitsteuerungsbefehle zu einer Signalisierung von Mehrschritt-Zeitsteuerungsbefehlen.

Mehrschritt-Zeitsteuerungsbefehle haben die vorstehend beschriebenen Vorteile, dass eine größere Schrittweite eine schnellere Anpassung an den aktuellen Zeitversatz ermöglicht, auch ohne über übergeordnete und damit langsame Protokolle eine Schrittweite, wie es bei binären bzw. ternären Befehlen erforderlich wäre, anpassen zu müssen. Damit werden für den in der Praxis hauptsächlich auftretenden Fall eines Zeitversatzes unterhalb des vorgegebenen Schwellwertes resourcensparende binäre bzw. ternäre Befehle verwendet, während in dem weniger häufig auftretenden Fall eines ermittelten Zeitversatzes gleich oder größer dem vorgegebenen Schwellwert auf schnellere und flexiblere Mehrschritt-Befehle zurückgegriffen wird.

Wird der Schwellwert beispielsweise mit 3 us definiert, so würde dies der Basisstation Node B bei einer Schrittweite von 1 us und einer Periodizität von einem Zeitsteuerungsbefehl je Multirahmen ermöglichen, mittels binärer bzw. ternärer Zeitsteuerungsbefehle einen Zeitversatz von 3 us innerhalb von drei Multirahmen auszugleichen, d.h. bevor das Teilnehmerendgerät UE A eine nachfolgende Signalübertragung durchführt. Wenn nach vorstehend beschriebenem Verfahren beispielsweise der Zeitversatz von Signalen des Teilnehmerendgerätes UE A von der Basisstation Node B zu 5 us ermittelt würde, so bedeutete dies ein Überschreiten des Schwellwertes von 3 us und die Basisstation Node B würde entsprechend von der aktuellen binären bzw. ternären Befehlssignalisierung zu einer Signalisierung von Mehrschritt-Befehlen zur Kompensierung dieses Zeitversatzes wechseln.

Das Teilnehmerendgerät UE A muss einen derartigen Wechsel des Formats der Befehlssignalisierung erkennen, um diese Befehle entsprechend umsetzen zu können. Dieses Erkennen kann nach der Erfindung in unterschiedlicher Art und Weise erfolgen. So kann dem Teilnehmerendgerät UE A der Wechsel des Befehlsformats bzw. das Überschreiten des Schwellwertes beispielsweise explizit signalisiert werden, beispielsweise über ein Setzen eines Statusbits einer Signalisierungsnachricht auf der physikalischen oder einer höheren Schicht des ISO-OSI-Schichtenmodels. Dabei können die Statusbits beispielsweise in einem für mehrere Teilnehmerendgeräte gemeinsam genutzten Kanal (engl. shared channel bzw. common channel) auf der physikalischen- (Schicht 1) oder Verbindungsschicht (Schicht 2) übertragen werden.

Alternativ hierzu kann seitens des Teilnehmerendgerätes UE A auch stetig versucht werden, Mehrschritt-Befehle zu empfangen bzw. zu detektieren, d.h. binäre bzw. ternäre Befehle und Mehrschritt-Befehle können von dem Teilnehmer-Endgerät bezüglich ihres Inhalts unterschieden werden, sodass in diesem Fall keine explizite Signalisierung des Wechsels seitens der Basisstation Node B erfolgen muss. Dies kann seitens des Teilnehmerendgerätes UE A gegebenenfalls auch nur in periodischen Abständen durchgeführt werden, d.h. das Teilnehmerendgerät versucht beispielsweise alle zwei Rahmen, einen Mehrschritt-Befehl zu detektieren und bemerkt somit einen von der Basisstation durchgeführten Wechsel des Befehlsformats. In gleicher Weise bemerkt das Teilnehmerendgerät einen Wechsel zurück zu der binären bzw. ternären Befehlssignalisierung. Hierdurch wird vorteilhaft die energiezehrende Verarbeitung in dem Teilnehmerendgerät UE A begrenzt.

Gemäß einer weiteren Alternative kann das Teilnehmerendgerät UE A autonom einen Wechsel des Befehlsformats ermitteln und die Detektion entsprechend daran anpassen, wenn es Signale der Basisstation Node B mit einem großen bzw. über einem Schwellwert liegenden Zeitversatz zu vorhergehend empfangenen Signalen empfängt (vergleichbar nachfolgender Beschreibung zu FIG 5) und eine zeitliche Reziprozität auch bei Nutzung unterschiedlicher Frequenzen zwischen Übertragungen in Aufwärts- UL und Abwärtsrichtung DL angenommen wird. Hierzu kann sich das Teilnehmerendgerät UE A beispielsweise auch an Signalen eines Pilotkanals, Synchronisationskanals oder Rundsendekanals orientieren.

Weiterhin können alternativ zu obigen Ausgestaltungen auch die bekannten Signalisierungen, wie sie zur Definition der Schrittweite und Periodizität von binären Befehlen verwendet werden, derart verändert bzw. ergänzt werden, dass dem Teilnehmerendgerät bei einem bestimmten Wert der Schrittweite und/oder der Periodizität implizit signalisiert wird, dass nachfolgend Mehrschritt-Befehle seitens der Basisstation verwendet werden.

Die vorstehend zu FIG 4 beschriebenen erfindungsgemäßen Schritte sind insbesondere für Teilnehmerendgeräte bzw. Verbindungen vorteilhaft, für die eine schnelle Reaktion auf sich stark verändernde Zeitdrifts erforderlich ist. Dies sind Teilnehmerendgeräte in beispielsweise einem so genannten aktiven RRC-Verbindungsmodus (RRC Connected Active Mode) oder in einem RRC-Verbindungsmodus mit einem bezüglich Übertragungsverzögerungen sensiblen Dienst, wie beispielsweise Videodatenübertragung.

In FIG 5 ist ein zweites Ausführungsbeispiel des erfindungsgemäßen Verfahrens in Form eines Ablaufdiagramms dargestellt, welches wiederum auf der vorstehend beschriebenen Ausgangssituation basiert. Nach diesem Ausführungsbeispiel empfängt das Teilnehmerendgerät UE A Signale der Basisstation Node B, in dessen Funkzelle ZA es sich aktuell befindet, und steuert eine zeitliche Aussendung in Aufwärtsrichtung zu der Basisstation Node B nach dem Prinzip einer offenen Regelungsschleife. Dies können beispielsweise Signale eines Pilotkanals, Synchronisationskanals oder Rundsendekanals sein, welcher von der Basisstation Node B mit einer vergleichsweise hohen Sendeleistung ausgesendet wird und dem Teilnehmerendgerät UE A eine sichere Detektion ermöglicht.

Die empfangenen Signale bzw. der stärkste Signalpfad werden in dem Teilnehmerendgerät UE A mit vorhergehend empfangenen Signalen bzw. dessen ermittelter Zeitreferenz verglichen und ein relativer Zeitversatz zwischen vorhergehend und aktuell empfangenen Signalen ermittelt. Nachfolgend vergleicht das Teilnehmerendgerät UE A den ermittelten Zeitversatz mit einem vorgegebenen Schwellwert. Dieser Schwellwert ist dabei beispielsweise durch eine Standardspezifikation definiert oder wird dem Teilnehmerendgerät UE A als individuell adaptierbarer Wert von der Basisstation Node B oder einer übergeordneten Komponente des Systems signalisiert.

Ergibt der Vergleich, dass der ermittelte Zeitversatz kleiner dem Schwellwert ist - Ergebnis "nein" - , so führt das Teilnehmerendgerät UE A eine zeitliche Steuerung nachfolgender Signalübertragungen in Aufwärtsrichtung UL nach dem bekannten Verfahren, gegebenenfalls unter Berücksichtigung von von der Basisstation Node B empfangenen binären bzw. ternären Zeitsteuerungsbefehlen durch.

Ergibt der Vergleich hingegen, dass der ermittelte Zeitversatz gleich oder größer dem vorgegebenen Schwellwert ist - Ergebnis "ja" - , so sendet das Teilnehmerendgerät UE A zunächst keine weiteren Signale in Aufwärtsrichtung zu der Basisstation Node B, sondern führt eine neue Synchronisationsprozedur durch. Diese Neusynchronisierung ist sinnvoll, da die Detektionswahrscheinlichkeit von nachfolgend in Aufwärtsrichtung UL übertragenen Signalen aufgrund des großen Zeitversatzes stark verringert ist.

Führt das Teilnehmerendgerät UE A beispielsweise eine so genannte unsynchronisierte RACH-Prozedur (RACH - Random Access Channel) durch, d.h. das Teilnehmerendgerät UE A steuert die zeitliche Aussendung nach einer offenen Regelungsschleife zunächst ausschließlich anhand von der Basisstation Node B empfangenen Signalen eines Pilot-, Synchronisations- oder Rundsendekanals und sendet eine oder mehrere Zugriffsnachrichten in einem zufallsgesteuerte Zugriffskanal RACH, so wird durch die Struktur des Zugriffskanals RACH und verwendeten Zugriffsnachrichten die Detektionswahrscheinlichkeit am Ort der Basisstation Node B deutlich erhöht. Die Aussendung von Zugriffsnachrichten kann dabei konkurrierend (engl. contention based mode) oder nicht-konkurrierend (engl. contentionfree mode) erfolgen, d.h. unter Verwendung von Ressourcen des Zugriffskanals RACH, welche exklusiv für eine derartige Synchronisationsprozedur bzw. Teilnehmerendgeräte mit bereits bestehender Verbindung reserviert sind, oder von Ressourcen, welche ebenfalls für weitere Funktionalitäten, beispielsweise für einen Erstzugriff (engl. initial access), genutzt werden. Dies kann abhängig von dem Status des Teilnehmerendgerätes UE A und/oder dem aktuell unterstützten Dienst gewählt werden bzw. durch die Standardspezifikation oder von der Basisstation Node B signalisierte Systemparameter vorgegeben sein.

Alternativ zu einem direkten Übergang zu einer Neusynchronisation kann, wie in FIG 5 gestrichelt umrandet dargestellt, seitens des Teilnehmerendgerätes UE A auch der Basisstation Node B zunächst mittels einer Signalisierung in Aufwärtsrichtung UL mitgeteilt werden, dass der Schwellwert überschritten wurde. Hierzu kann das Teilnehmerendgerät UE A zunächst mittels einer autonomen Anpassung der zeitlichen Aussendung von Signalen in Aufwärtsrichtung UL versuchen, den ermittelten Zeitversatz zu kompensieren. Die Signalisierung in Aufwärtsrichtung UL wird anschließend von der Basisstation Node B ausgewertet, gegebenenfalls mit eigenen Ermittlungen (wie zu FIG 4 beschrieben) verglichen und bei Zutreffen bzw. Übereinstimmung entschieden, dass das Teilnehmerendgerät UE A eine neue Synchronisationsprozedur durchführen soll. Dies wird dem Teilnehmerendgerät UE A in einem nächsten Schritt signalisiert, sodass diese nach einer Auswertung der Signalisierung eine vorstehend beschriebene neue Synchronisationsprozedur initiiert. Zur Signalisierung können beispielsweise bekannte Signalisierungen, wie sie zur Definition der Schrittweite und Periodizität von binären Befehlen verwendet werden, derart verändert bzw. ergänzt werden, dass dem Teilnehmerendgerät bei einem bestimmten Wert der Schrittweite und/oder der Periodizität implizit signalisiert wird, eine neue Synchronisationsprozedur durchzuführen.

Alternativ oder ergänzend zu den Verfahrensschritten in FIG 5 kann das Teilnehmerendgerät UE A bei Feststellung, dass der ermittelte Zeitversatz gleich oder größer dem Schwellwert ist, in jedem Fall zunächst versuchen, eine autonome Anpassung der zeitlichen Aussendung von Signalen in Aufwärtsrichtung UL mit dem Ziel, den ermittelten Zeitversatz zu kompensieren, durchzuführen. Sofern dies mit in Aufwärtsrichtung UL zu der Basisstation Node B gesendeten Signalen Erfolg hat, fährt die Basisstation Node B mit der Signalisierung von binären bzw. ternären Zeitsteuerungsbefehlen, oder bei einem größeren Versatz mit einem Wechsel zu Mehrschritt-Befehlen fort, eine Prozedur zur Neusynchronisation wird jedoch nicht durchgeführt. Das Teilnehmerendgerät UE A verwendet nach Empfang von Zeitsteuerungsbefehlen den autonom kompensierten Zeitversatz als neuen Referenzwert und passt die zeitliche Aussendung ausgehend von diesem Referenzwert entsprechend den signalisierten Befehlen für nachfolgende Aussendungen an. Sollte die autonome Kompensation hingegen keinen Erfolg haben, so wird mit den vorstehend zu FIG 5 beschriebenen Verfahrensschritten fortgefahren.

Die zu FIG 5 beschriebenen erfindungsgemäßen Schritte sind insbesondere für Teilnehmerendgeräte bzw. Verbindungen vorteilhaft, für die eine schnelle Reaktion auf sich stark verändernde Zeitversätze nicht erforderlich ist. Dies sind Teilnehmerendgeräte in beispielsweise einem so genannten schlafenden RRC-Verbindungsmodus (RRC Connected Dormant Mode) oder in einem RRC-Verbindungsmodus mit einem bezüglich Übertragungsverzögerungen toleranten Dienst, wie beispielsweise ein Herunterladen eines Dokuments.

Die zu den FIG 4 und FIG 5 beschriebenen Verfahrensschritte können auch vorteilhaft miteinander kombiniert werden, beispielsweise dahingehend, dass sowohl in der Basisstation Node B als auch in dem Teilnehmerendgerät UE A ein jeweiliger Zeitversatz ermittelt wird, und davon abhängig eine Abstimmung bezüglich des weiteren Austausches von Zeitsteuerungsbefehlen oder der Initiierung einer neuen Synchronisationsprozedur zwischen diesen erfolgt. Insbesondere können dabei die vorstehend genannten Schwellwerte unterschiedlich definiert werden, beispielsweise in dem Sinne, dass bei einem Überschreiten eines ersten Schwellwertes ein Wechsel von binären bzw. ternären Zeitsteuerungsbefehlen zu Mehrschritt-Zeitsteuerungsbefehlen erfolgt und bei einem Überschreiten eines zweiten, höher liegenden Schwellwertes eine neue Synchronisationsprozedur durchgeführt wird.

Bei einer vorstehend bereits genannten Verwendung von Steuerungsbefehlen wird ermöglicht, mittels ternärer Werte, d.h. ein Signalisierungsbit weist beispielsweise drei Zustände (+1, 0, -1) auf, eine gewünschte zeitliche Steuerung bzw. Veränderung im Sinne von "früher", "keine Änderung" und "später" signalisieren zu können. Dies hat gegenüber der bekannten binären Signalisierung insbesondere den Vorteil, dass mittels der binären Signalisierung nur die Zustände "früher" und "später" signalisiert werden konnten, auch wenn aufgrund des ermittelten Zeitversatzes eigentlich keine zeitliche Änderung der Aussendungen des Teilnehmerendgerätes UE A erforderlich ist (d.h. der Zeitversatz ist kleiner dem vorgegebenen maximalen Zeitversatz), wie es beispielsweise bei mehr oder weniger stationären Endgeräten, kleinen Funkzellen oder nur geringer Geschwindigkeit einer senkrechten Bewegungsrichtung des Endgerätes auftreten kann. nur früher und später signalisiert werden kann. In diesem Fall würde seitens der Basisstation Node B eine periodisch wechselnde Signalisierung von "früher" und "später" durchgeführt werden, welche in dem Teilnehmerendgerät zu einer permanenten Anpassung und dadurch verursacht zu einem höheren Energieverbrauch führen würde. Durch den dritten signalisierbaren Zustand "keine Änderung" kann dem Teilnehmerendgerät signalisiert werden, dass es keine Anpassung der zeitlichen Aussendung von Signalen in Aufwärtsrichtung durchführen soll.

Alternativ zu einer Verwendung eines einzigen Signalisierungsbits mit drei Zuständen können auch zwei Signalisierungsbits für die gleichen drei Zeitsteuerungsbefehle definiert werden, beispielsweise mit den drei Zuständen 11 "früher", 00 "später" und 10 und/oder 01 "keine Änderung". Weiterhin kann der dritte Zustand "keine Änderung" alternativ auch mittels einer Unterdrückung der Aussendung eines Zeitsteuerungsbefehls im Sinne einer unterbrochenen Übertragung DTX (discontinuous transmission) verwirklicht werden. Dies bedeutet, dass wenn das Teilnehmerendgerät keinen Befehl von der Basisstation empfängt, obwohl es nach der Struktur der Aussendung des Befehls diesen eigentlich empfangen sollte, so interpretiert sie diese Nicht-Übertragung als Befehl "keine Änderung".

Die dem Zeitsteuerungsbefehl jeweils zugrunde liegende Schrittweite kann beispielsweise auf Funkzellbasis oder auch teilnehmerendgeräteindividuell definiert werden. Sofern ein dedizierter Kanal in Aufwärtsrichtung UL, d.h. bei einer bereits existierenden Verbindung, für die Steuerung der zeitlichen Synchronisation verwendet wird, so kann beispielsweise eine bestimmte Anzahl aufeinander folgender Befehle "keine Änderung" dem Teilnehmerendgerät signalisieren, dass die Schrittweite der Befehle "früher" oder "später" verringert bzw. vergrößert wird, und/oder dass die Periodizität des Zeitintervalls der Synchronisationssteuerung verringert wird, d.h. Zeitsteuerungsbefehle seltener signalisiert werden. Dies erfordert entgegen dem bekannten Verfahren der binären Signalisierung dem Teilnehmerendgerät vorteilhaft keine dezidierte und damit eine erhöhte Systemlast hervorrufende Signalisierung auf höheren Schichten. Vorteilhaft kann zudem von einer Schätzung der Geschwindigkeit des Teilnehmerendgerätes sowohl seitens des Teilnehmerendgerätes selbst als auch seitens der Basisstation abgesehen werden, welches bei der bekannten binären Signalisierung erforderlich ist.

## Patentansprüche

1. Verfahren zur Steuerung einer zeitlichen Aussendung von Signalen eines Teilnehmerendgerätes (UE A) für einen zeitsynchronen Empfang an einer Basisstation (Node B) eines Funk-Kommunikationssystems, bei dem
bei Feststellung, dass ein ermittelter Zeitversatz von empfangenen Signalen gleich oder größer einem vorgegebenen Schwellwert ist, die Basisstation (Node B) von Einschritt-Steuerungsbefehlen zu Mehrschritt-Steuerungsbefehlen zur Steuerung der zeitlichen Aussendung des Teilnehmerendgerätes (UE A) wechselt, oder das Teilnehmerendgerät (UE A) eine Synchronisationsprozedur unter Verwendung eines zufallsgesteuerten Zugriffskanals initiiert.

2. Verfahren nach Anspruch 1, bei dem
als Einschritt-Steuerungsbefehl ein binäres oder ternäres Signalisierungsbit verwendet wird.

3. Verfahren nach Anspruch 1 oder 2, bei dem
der Zeitversatz von der Basisstation (Node B) und/oder dem Teilnehmerendgerät (UE A) ermittelt wird.

4. Verfahren nach einem vorstehenden Anspruch, bei dem
der Zeitversatz mittels eines Vergleichs eines Empfangszeitpunktes von empfangenen Signalen mit einer Zeitreferenz ermittelt wird.

5. Verfahren nach einem vorstehenden Anspruch, bei dem
bei einer Wahl, ob ein Wechsel der Steuerungsbefehle durchgeführt oder eine Synchronisationsprozedur initiiert werden soll, ein aktueller Status des Teilnehmerendgerätes (UE A) und/oder ein Diensttyp einer bestehenden Verbindung zu dem Teilnehmerendgerät (UE A) berücksichtigt wird.

6. Verfahren zur Steuerung einer zeitlichen Aussendung von Signalen eines Teilnehmerendgerätes (UE A) für einen zeitsynchronen Empfang an einer Basisstation (Node B) eines Funk-Kommunikationssystems, bei dem von der Basisstation (Node B) ternäre Zeitsteuerungsbefehle verwendet werden.

7. Basisstation (Node B) eines Funk-Kommunikationssystems, aufweisend
zumindest eine Sende-/Empfangseinrichtung (SEE) zum Empfangen von Signalen in Aufwärtsrichtung (UL) von zumindest einem Teilnehmerendgerät (UE A, UE B) sowie zum Aussenden von Zeitsteuerungsbefehlen zur Steuerung einer zeitlichen Aussendung von nachfolgenden Signalen des zumindest einen Teilnehmerendgerätes (UE A), und
zumindest eine Steuereinrichtung (ST) zum Ermitteln eines Zeitversatzes aus den empfangenen Signalen und zum Vergleichen des ermittelten Zeitversatzes mit einem vorgegebenen Schwellwert, und zum Wechseln von Einschritt-Steuerungsbefehlen zu Mehrschritt-Steuerungsbefehlen bei einem ermittelten Zeitversatz gleich oder größer einem vorgegebenen Schwellwert.

8. Teilnehmerendgerät (UE A) eines Funk-Kommunikationssystems, aufweisend
zumindest eine Sende-/Empfangseinrichtung (SEE) zum Senden von Signalen in Aufwärtsrichtung (UL) zu zumindest einer Basisstation (Node B) des Funk-Kommunikationssystems und zum Empfangen von Signalen in Abwärtsrichtung (DL) von der Basisstation (Node B), und
zumindest eine Steuereinrichtung (ST) zum Ermitteln eines Zeitversatzes aus den empfangenen Signalen und zum Vergleichen des ermittelten Zeitversatzes mit einem vorgegebenen Schwellwert, und zum Initiieren einer Synchronisationsprozedur unter Verwendung eines zufallsgesteuerten Zugriffskanals bei einem ermittelten Zeitversatz gleich oder größer einem vorgegebenen Schwellwert.

9. Teilnehmerendgerät (UE A) nach Anspruch 8, wobei
die zumindest eine Steuereinrichtung (ST) ausgestaltet ist zum zeitlichen Steuern eines nachfolgenden Sendens von Signalen zu der Basisstation (Node B) unter Berücksichtigung des ermittelten Zeitversatzes.

10. Funk-Kommunikationssystem, aufweisend zumindest eine Basisstation (Node B) nach Anspruch 7 und ein Teilnehmerendgerät (UE A) nach Anspruch 8.
